(19)

**Europäisches Patentamt**

**European Patent Office**

**Office européen des brevets**

(11) **EP 4 517 287 B1**

(12) **EUROPEAN PATENT SPECIFICATION**

(45) Date of publication and mention
of the grant of the patent:
**29.10.2025 Bulletin 2025/44**

(21) Application number: **23194803.5**

(22) Date of filing: **01.09.2023**

(51) International Patent Classification (IPC):
***G01L 9/00*** (2006.01)      ***G01L 9/04*** (2006.01)
***G01L 9/06*** (2006.01)      ***G01L 1/22*** (2006.01)

(52) Cooperative Patent Classification (CPC):
**G01L 9/0054; G01L 1/2262; G01L 9/0055;**
**G01L 9/04; G01L 9/065**

(54) **SEMICONDUCTOR PRESSURE SENSOR**

HALBLEITERDRUCKSENSOR

CAPTEUR DE PRESSION À SEMI-CONDUCTEUR

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(43) Date of publication of application:
**05.03.2025 Bulletin 2025/10**

(73) Proprietor: **Melexis Technologies NV**
**3980 Tessenderlo (BE)**

(72) Inventors:
• **MAES, Ben**
**3980 Tessenderlo (BE)**
• **VAN DER WIEL, Appo**
**3980 Tessenderlo (BE)**

(74) Representative: **Winger**
**Mouterij 16 bus 101**
**3190 Boortmeerbeek (BE)**

(56) References cited:
**EP-A1- 2 490 036      WO-A1-2006/034751**
**GB-A- 2 521 163      US-B2- 10 317 297**

**Description**

**Field of the invention**

The invention relates to the field of pressure sensors. More specifically it relates to a pressure sensor comprising piezo-resistors mounted on a membrane.

**Background of the invention**

In general a pressure sensor provides an output signal by means of piezo resistors that are configured together in a certain configuration, often configured as a Wheatstone bridge. The piezo resistors are placed on the edge of a membrane in a transversal and longitudinal direction with respect to the membrane stress that is proportional to the applied pressure. When a differential pressure is applied to the membrane, the membrane will bend and will create a stress on the edges of the membrane. This stress will change the resistance of the piezo resistors and therefore the output voltage will change depending on the stress. In summary: a differential pressure between the top and bottom side of the membrane will create an output voltage on the Wheatstone bridge that is an indication of the applied differential pressure.

It becomes problematic when the piezo resistors are changing due to a different source than the differential pressure. E.g. an external stress or a temperature gradient. A change of the piezo resistors due to a different source than the differential pressure might influence the sensor output and give an undesired signal.

When the piezo resistors are placed in a Wheatstone bridge configuration, it is robust against sources that influence certain combinations of piezo resistors. When the differential output of the Wheatstone bridge does not change, there is no undesired signal (ignoring some secondary effects like self-heating of the piezo resistors and common mode voltage influence on the amplifier).

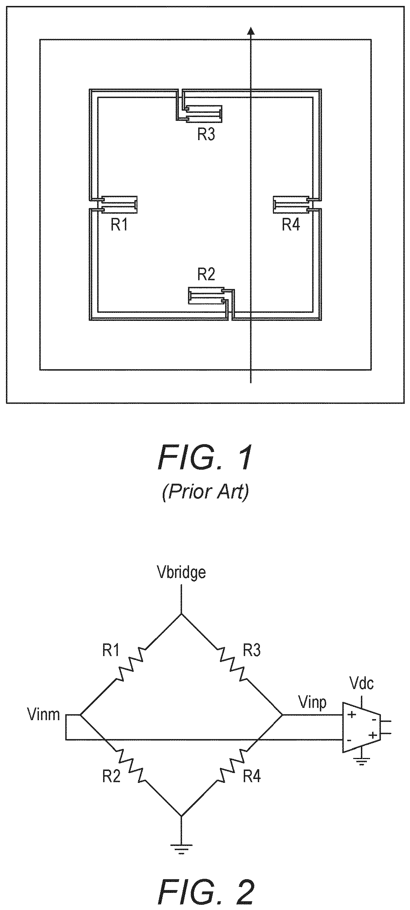

FIG. 1 shows a prior art layout of piezo-resistors R1, R2, R3 and R4 on a membrane. FIG. 2 shows an electronic circuit wherein piezo-resistors R1, R2, R3 and R4 are arranged in a Wheatstone bridge layout. A supply voltage Vbridge is applied to the node between R1 and R3 and ground is connected to the node between R2 and R4. The output voltage is measured between the node (voltage Vinm) between R1 and R2, and the node (Vinp) between R3 and R4.

A first example that shows the robustness of the Wheatstone bridge is when all the resistors R1, R2, R3, R4 change with the same percentage. In that case the outputs Vinm and Vinp don't change. This example shows how the common mode influence of e.g. temperature on the piezo resistors can be compensated.

A second example is when all the resistors in one leg of the Wheatstone bridge change with the same percentage. Also, in this case the outputs Vinm and Vinp don't change. However, this is less ideal because the current through the different legs of the Wheatstone bridge is different which might be a cause for some imbalance (e.g. different self-heating of the resistors which might give them a different sensitivity).

A third example is when the 2 piezo resistors connected to the same supply voltage change with the same percentage. This will change the single ended outputs in exactly the same way so that the differential output does not change. However, this is also not ideal since the common mode output does change and might have an influence on the amplification of the amplifier.

In a fourth example there are two pairs of piezo resistors. Each pair changes with the same percentage but the pairs change with different percentages. The piezoresistor pairs (R1, R3) may change with a same first percentage and the piezoresistor pairs (R2, R4) may change a same second percentage. In another case the piezoresistor pairs (R1, R2) may change a same first percentage and (R3, R4) may change a same second percentage. The differential output is not changing and thus the Wheatstone bridge configuration is also robust for such a change, for instance a gradient of stress or temperature over the membrane with the Wheatstone bridge.

An undesired signal is created when there is a change in resistance of the piezo resistors due to a different source than the pressure which changes the differential output of the Wheatstone bridge. It is for example possible that a stress source creates an irregular stress gradient over the chip as indicated by the arrow in FIG. 1. This arrow represents a stress gradient. A stress source may for example be present at the beginning of the arrow resulting in high stress at the beginning of the arrow and low stress add the end of the arrow. This might, for example, result from package stress or due to metal stress on one side of the die. As a result, the piezo resistors don't see the same stress and the output signal will have an error. In this example the piezo resistors R2 sees much more stress from the stress source than the other 3 resistors and that changes the Wheatstone bridge output.

Another external influence could be that a temperature gradient or a local hotspot heats up one resistor in the bridge more than the other resistors. This would also create a wrong Wheatstone bridge output signal.

Basically a symmetric Wheatstone bridge configuration laying over a certain area or membrane area compensates for linear stress gradients and linear temperature gradients over that area, but not for non-linear stress- or temperature gradients.

Conventional piezoresistor stress sensors are only capable of partially compensating external stress or temperature effects. They are typically not compensating the stress or temperature when the gradient is non-linear or when the stress or temperature change is very local. Other examples of semiconductor pressure sensors are described in GB2521163A or in US10317297B2.

There is therefore a need for semiconductor pressure sensors that can compensate for disturbances which change irregularly.

## Summary of the invention

It is an object of embodiments of the present invention to provide a good semiconductor pressure sensor.

The above objective is accomplished by a method and device according to the present invention.

Embodiments of the present invention relate to a semiconductor pressure sensor for measuring an external pressure exerted on the sensor.

The semiconductor pressure sensor comprises a membrane as part of a semiconductor substrate for being deformed due to the external pressure.

The semiconductor pressure sensor, moreover, comprises a first group of neighboring resistors comprising a sensing resistor pair (a first resistor pair R1a, R2a) and a compensating resistor pair (a third resistor pair R1b, R2b) and a second group of neighboring resistors comprising a sensing resistor pair (a second resistor pair R3a, R4a) and a compensating resistor pair (a fourth resistor pair R3b, R4b).

The sensing resistor pairs are located on or adjacent to the membrane edge and the compensating resistor pairs are located at least partially outside the membrane or on a zero stress zone of the membrane, and the resistors of each resistor pair are orthogonal, and the resistors are connected in a Wheatstone bridge configuration.

In the Wheatstone bridge configuration the first resistor (R1a) of the first resistor pair and the first resistor (R1b) of the third resistor pair are connected in series between a first bias node (Vbridge) and a first output node (Vinm); the second resistor (R2a) of the first resistor pair and the second resistor (R2b) of the third resistor pair are connected in series between the first output node (Vinm) and a second bias node (GND); the first resistor (R3a) of the second resistor pair and the first resistor (R3b) of the fourth resistor pair are connected in series between the first bias node (Vbridge) and a second output node (Vinp); the second resistor (R4a) of the second resistor pair and the second resistor (R4b) of the fourth resistor pair are connected in series between the second output node (Vinp) and the second bias node (GND);

In embodiments of the present invention the first resistor (R1a) of the first resistor pair and the first resistor (R1b) of the third resistor pair are orthogonal, and the first resistor (R3a) of the second resistor pair and the first resistor (R3b) of the fourth resistor pair are orthogonal, and the second resistor (R2a) of the first resistor pair and the second resistor (R2b) of the third resistor pair are orthogonal, and the second resistor (R4a) of the second resistor pair and the second resistor (R4b) of the fourth resistor pair are orthogonal.

In embodiments of the present invention the membrane has a square or rectangular shape.

In embodiments of the present invention the first group of neighboring resistors is arranged at a first side of the membrane and the second group of neighboring resistors is arranged at a second side of the membrane.

In embodiments of the present invention the first side is next to the second side.

In embodiments of the present invention the first side is opposite to the second side.

In embodiments of the present invention the membrane has a circular or ellipsoidal shape.

In embodiments of the present invention the first group and the second group have an angular separation of 90°.

In embodiments of the present invention a voltage difference between the first output node and the second output node is used as a measure of the pressure on the membrane.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

## Brief description of the drawings

FIG. 1 shows a prior art layout of piezo-resistors on a membrane.

FIG. 2 shows an electronic circuit wherein the piezo-resistors of FIG. 1 are arranged in a Wheatstone bridge layout.

FIG. 3 shows a layout of piezo resistors of a semiconductor pressure sensor comprising two groups of adjacent piezo resistors on a square membrane.

FIG. 4 shows a layout of piezo resistors of a semiconductor pressure sensor comprising two groups of adjacent piezo resistors on a circular membrane.

FIG. 5 shows a layout of piezo resistors of a semiconductor pressure sensor comprising two groups of adjacent piezo resistors on a square membrane, wherein the compensating resistors are positioned in a zero stress zone of the membrane.

FIG. 6 shows possible Wheatstone bridge configurations of piezo resistors arranged in a layout in accordance with embodiments of the present invention.

FIG. 7 shows the effect of a stress gradient and of a load stress concentration on a semiconductor pressure sensor in accordance with embodiments of the present invention.

Any reference signs in the claims shall not be construed as limiting the scope. In the different drawings, the same reference signs refer to the same or analogous elements.

## Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to a zero stress zone of the membrane, reference is made to a zone where the stress does not significantly change with differential pressure between the top and bottom side of the membrane. The piezo resistors which are positioned at least partially in the zero stress zone are not or less sensitive to the differential pressure compared to the piezo-resistors at the side of the membrane.

In embodiments of the present invention the piezo resistors are forming groups of neighboring piezo resistors.

The neighboring piezo resistors may for example be present in a section between two lines going through the center of the membrane and having an angle of 90° between them. In such embodiments the neighboring piezo resistors are present in a quarter of the membrane. In some embodiments the angle may be smaller than 90°, or even smaller than 80°, or even smaller than 70°, or even smaller than 60°, or even smaller than 50°, or even smaller than 40°, or even smaller than 30°.

A semiconductor pressure sensor 100 according to embodiments of the present invention is provided in a substrate 105.

The semiconductor pressure sensor 100 comprises a membrane 110. In embodiments of the present invention the membrane 110 is obtained by making a cavity in the substrate. The membrane 110 is supported by a rim 120 at an edge of the membrane 110. The substrate may for example be a Silicon substrate.

A semiconductor pressure sensor 100 according to embodiments of the present invention comprises a plurality of groups of neighboring resistors. Each group comprises two resistor pairs. One resistor pair which is positioned such that it is sensitive to the pressure that is applied to the sensor and one neighboring resistor pair which is positioned such that it is significantly less sensitive to the applied pressure. This is achieved by positioning the significantly less sensitive resistors at least partially outside of the membrane or at least partially on a zero stress zone of the membrane and the pressure sensitive resistors at least partially on the membrane. In embodiments of the present invention the groups are positioned on separate areas. In each area the pressure sensitive resistors are oriented to be sensitive to the pressure induced stress. In embodiments of the present invention the piezo resistors are oriented such that the stress in the directions of the piezo resistors is higher than the stress in other directions. The direction of the piezo resistors may be different for the different groups.

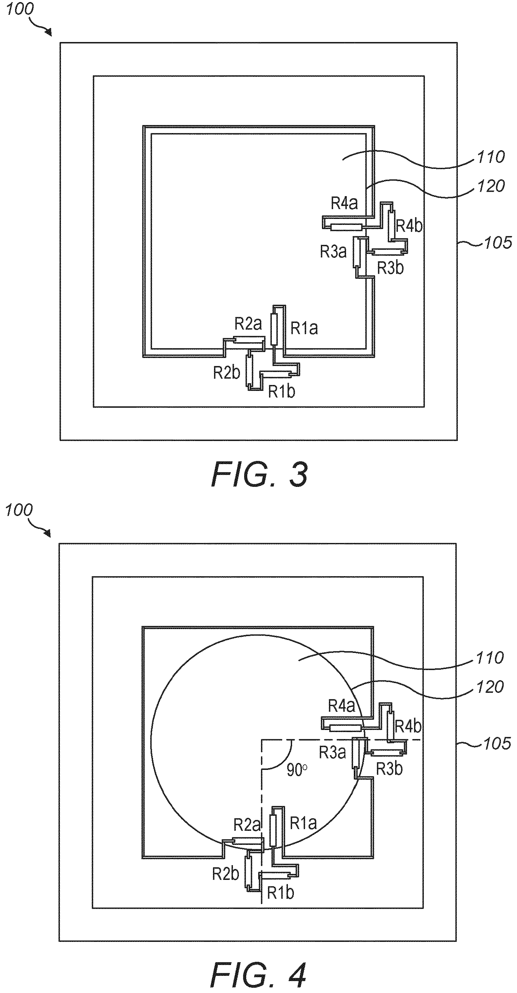

In embodiments of the present invention the resistors of these resistor pairs are piezo resistors. These may be located on different membrane sides if the sensor comprises a membrane with different sides with corners in between them. If the sensor comprises a membrane with a continuous membrane edge (without corners), groups of neighboring piezo resistors may be separated by a distance which is larger than the distance between piezo resistors within a group. The groups may be present on adjacent sides of the membrane but this is not strictly required. They may for example also be present on opposite sides of the membrane. They may also be present at the same side of the membrane. An exemplary embodiment of the present invention wherein two groups of neighboring piezo resistors are present is illustrated in FIG. 3. The picture shows a schematic drawing of the pressure sensor. In this example the membrane is square and a first group of piezo resistors (R1a, R2a, R1b, R2b) is present on a first side of the membrane and a second group of piezo resistors (R3a, R4a, R3b, R4b) is present on a second side of the membrane adjacent to the first side. Other membrane shapes such as a rectangle or circle or ellipse are also possible. The invention is, however, not limited thereto.

An example of a semiconductor pressure sensor in accordance with embodiments of the present invention which comprises a circular membrane is illustrated by the schematic drawing of FIG. 4. In case of a circular or ellipsoidal membrane the groups (first group: R1a, R2a, R1b, R2b; second group: R3a, R4A, R3b, R4b) may for example have an angular separation of 90° on the circle or ellipse. This is illustrated in FIG. 4 for the circular membrane. It shows the pressure sensitive resistors R1a and R2a of the first group and the resistors R1b and R2b of the first group which are outside the membrane and therefore insensitive for the pressure on the membrane. The second group comprises the pressure sensitive resistors R3a and R4a and the pressure insensitive resistors R3b and R4b. The angular separation between both groups is 90° in this example. This is the angle between a first line which goes through the center of the circle and the center of the first group and a second line which goes through the center of the circle and the center of the second group.

Thus, in embodiments of the present invention a first group of neighboring piezo resistors comprises a first resistor pair R1a, R2a, and a third resistor pair R1b, R2b, and a second group of neighboring piezo resistors comprises a second resistor pair R3a, R4a, and a fourth resistor pair R3b, R4b. The first group of neighboring piezo resistors and the second group of neighboring piezo resistors are located at different stress areas.

The first resistor pair R1a, R2a is located on or adjacent to the membrane edge on a position on the membrane where stress is induced due to a differential pressure over the membrane, and the second resistor pair R3a, R4a is separated from the first resistor pair and located on or adjacent to the membrane edge on a position on the membrane where stress is induced due to a differential pressure over the membrane. The first resistor pair and the second resistor pair are the sensing resistors. The first and the second resistor pair are therefore sensitive to stress due to a pressure on the membrane.

The third resistor pair and the fourth resistor pair are placed on a position where stress due to differential pressure is low or neglectable compared to the stress induced at the positions of the first and third resistor pair. The third resistor pair R1b, R2b and the fourth resistor pair R3b, R4b may therefore be located at least partially outside of the membrane or at least partially on a zero stress zone of the membrane. The third resistor pair and the fourth resistor pair are the compensating resistors.

The third and fourth resistor pairs may for example be positioned such that the piezo resistors of these pairs are 50% less sensitive, or even 70% less sensitive, or even 90% less sensitive, or even 95% less sensitive for applied pressure than the piezo resistors of the first and second resistor pairs near the edge of the membrane.

The pressure sensitive resistors of the first R1a, R2a and second R3a, R4a resistor pairs of piezo resistors may be located substantially on the membrane. For example at least 50%, or even at least 60%, or even at least 70%, or even at least 80%, 90% of the piezo resistor surface area may be located on the membrane. Part of it may be located on the edge of the membrane as this edge may be subject to relatively high stress when a pressure difference is applied to the membrane.

When, in embodiments of the present invention, the piezo resistors of the third and the fourth resistor pair are positioned substantially outside the membrane, for example at least 90% of the piezo resistor surface area may be located outside the membrane. When, in embodiments of the present invention, the piezo resistors of the third and fourth resistor are outside the membrane edge, they may be located near the edge of the membrane for better matching with the piezo resistors of the first and second resistor pair respectively, but they may be located further away from the membrane edge than the piezo resistors of the first and second resistor pair.

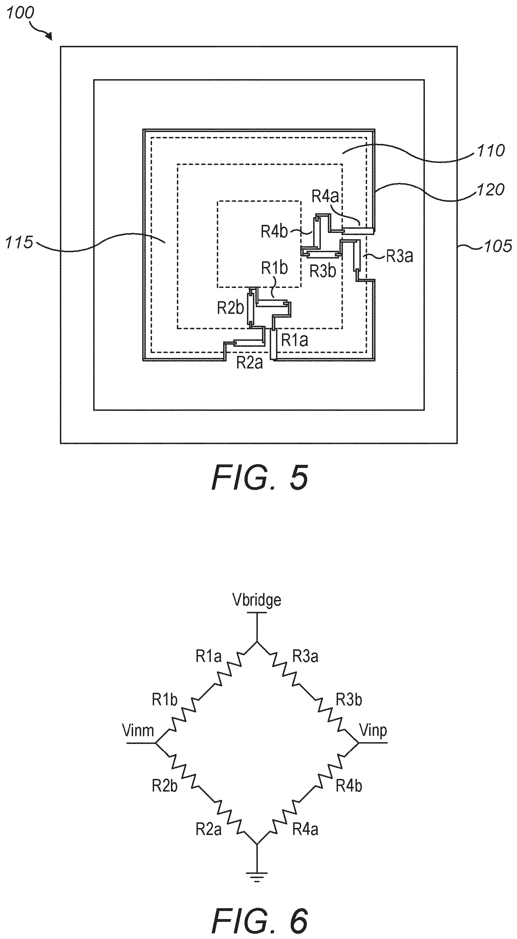

An example with the compensating resistors outside of the membrane is illustrated in FIG. 3. The "a" resistors are the sensing resistors and the "b" resistors are the compensating resistors. An example with the compensating resistors on a zero stress zone 115 of the membrane 110 is illustrated in FIG. 5.

In embodiments of the present invention the resistors of each resistor pair are orthogonal. In embodiments of the present invention the resistors are connected in a Wheatstone bridge configuration which is designed such that alterations in the signals of the resistors which are induced by disturbances such as for example by a stress gradient or a temperature gradient over the sensor, are significantly reduced or even completely eliminated.

In embodiments of the present invention the resistors may be connected in the following Wheatstone bridge configuration:

- the first resistor R1a of the first resistor pair and the first resistor R1b of the third resistor pair are connected in series between a first bias node $V_{bridge}$ and a first output node $V_{inm}$;
- the second resistor R2a of the first resistor pair and the second resistor R2b of the third resistor pair are connected in series between the first output node Vinm and a second bias node GND;
- the first resistor R3a of the second resistor pair and the first resistor R3b of the fourth resistor pair are connected in series between the first bias node Vbridge and a second output node Vinp;
- the second resistor R4a of the second resistor pair and the second resistor R4b of the fourth resistor pair are connected in series between the second output node Vinp and the second bias node GND.

In view of the series connections of measuring and compensating resistors a particularly advantageous configuration is obtained because it enables an efficient routing, and this even when the number of metals in the microelectromechanical system design is limited to one. It is, moreover, an advantage of such a particular Wheatstone bridge configuration that the number of bondpads can be limited.

In embodiments of the present invention the resistors may be positioned in a point symmetric layout:

- the first resistor R1a of the first resistor pair and the first resistor R1b of the third resistor pair are orthogonal, and
- the second resistor R2a of the first resistor pair and the second resistor R2b of the third resistor pair are orthogonal, and
- the first resistor (R3a) of the second resistor pair and the first resistor (R3b) of the fourth resistor pair are orthogonal, and
- the second resistor R4a of the second resistor pair and the second resistor R4b of the fourth resistor pair are orthogonal.

When the substrate has a (100) oriented silicon surface, the pressure sensitive resistors are preferably placed along the <110> directions for a p-type substrate and in the <100> directions for a n-type substrate. The reference resistors should be in the same family of directions (e.g. <110>) as the pressure sensitive resistors to be able to compensate for package stress.

In embodiments of the present invention where the membrane has a square or rectangular shape, the first group of neighboring resistors may be arranged at a first side of the membrane and the second group of neighboring resistors may be arranged at a second side of the membrane. The first side may be next to the second side. An example thereof is illustrated in FIG. 3. Alternatively the first side may be opposite to the second side.

The Wheatstone configuration as illustrated in FIG. 6 is applicable for the semiconductor pressure sensor layout as illustrated in FIG. 3, FIG. 4, and FIG. 5. They are connected in a single Wheatstone configuration by placing the compensation resistors in series with the pressure sensitive resistors.

In embodiments of the present invention a voltage difference $V_{out}$ between the first output node $V_{inm}$ and the second output node $V_{inp}$ is used as a measure of the pressure on the membrane. The difference in voltage may be detected at an analog input interface. With an analog to digital converter the signal may be converted into a digital number. Calibration of the sensor may be done in a digital way by using the ADC values for the voltage differences in a polynomial equation together with calibration constants.

For the Wheatstone bridge configuration of FIG. 6 the following equation holds:

$$V_{out} = V_{bridge} \frac{(R_{4a} + R_{4b})(R_{1a} + R_{1b}) + (R_{4a} + R_{4b})(R_{2a} + R_{2b}) - (R_{2a} + R_{2b})(R_{3a} + R_{3b}) - (R_{2a} + R_{2b})(R_{4a} + R_{4b})}{(R_{1a} + R_{1b})(R_{3a} + R_{3b}) + (R_{4a} + R_{4b})(R_{1a} + R_{1b}) + (R_{2a} + R_{2b})(R_{3a} + R_{3b}) + (R_{2a} + R_{2b})(R_{4a} + R_{4b})}$$

In order to calculate the sensitivity it is assumed that all the compensation resistors are set to R and that no package stress is applied. In that case the following equations can be obtained:

$$R_{1a} = R_{4a} = R_l$$

*and*

$$R_{2a} = R_{3a} = R_t,$$

and

$$R_{1b} = R_{2b} = R_{4b} = R_{3b} = R$$

Assuming that the original resistor sizes are the same. Assuming, moreover, that also the piezo resistive coefficients are the same $\alpha_1 = \alpha_4 = \beta_2 = \beta_3 = \gamma$:

$$V_{out} = V_{bridge} \frac{(R_l + R)^2 + (R_l + R)(R_t + R) - (R_t + R)^2 - (R_l + R)(R_t + R)}{(R_l + R)(R_t + R) + (R_l + R)^2 + (R_t + R)^2 + (R_l + R)(R_t + R)}$$

$$V_{out} = V_{bridge} \frac{R_l^2 + 2R_lR + R^2 - R_t^2 - 2R_tR - R^2}{R_l^2 + 2R_lR + R^2 + R_t^2 + 2R_tR + R^2 + 2R_lR_t + 2R_lR + 2R_tR + 2R^2}$$

$$V_{out} = V_{bridge} \frac{R_l^2 - R_t^2}{R_l^2 + 4R_lR + 4R^2 + R_t^2 + 4R_tR + 2R_lR_t}$$

Replacing $R_l$ with R+$\gamma$PR and $R_t$ with R-$\gamma$PR wherein P is the pressure on the membrane, the equation becomes:

$$V_{out}$$
$$= V_{bridge} * \frac{(R^2 + 2\gamma PR^2 + R^2\gamma^2 P^2) - (R^2 - 2\gamma PR^2 + R^2\gamma^2 P^2)}{R^2 + 2\gamma PR^2 + R^2\gamma^2 P^2 + 4R(1 + \gamma P)R + 4R^2 + R^2 - 2\gamma PR^2 + R^2\gamma^2 P^2 + 4R(1 - \gamma P)R + 2R(1 + \gamma P)R(1 - \gamma P)}$$

$$V_{out} = V_{bridge} * \frac{4\gamma PR^2}{R^2 + 2\gamma PR^2 + R^2\gamma^2 P^2 + 4R^2 + 4R^2\gamma P + 4R^2 + R^2 - 2\gamma PR^2 + R^2\gamma^2 P^2 + 4R^2 - 4R^2\gamma P + 2R^2(1 - \gamma^2 P^2)}$$

$$V_{out} = V_{bridge} \frac{4\gamma PR^2}{16R^2} = V_{bridge} \frac{\gamma P}{4}$$

$$V_{CM}[V] = \frac{Vbridge}{2}$$

$$Sensitivity \left[\frac{\frac{mV}{V}}{bar}\right] = \frac{V_{out}[mV]}{\frac{V_{CM}}{P}} = \frac{V_{out}[mV]}{\frac{Vbridge}{2}} = \frac{V_{bridge}\frac{\gamma P}{4}}{\frac{Vbridge}{2}} = \frac{\gamma}{2}$$

A piezo resistor will also change with temperature, and hence also when a temperature gradient is present over the semiconductor pressure sensor.

When a stress is applied on a piezo resistor in the same direction as the current this will change the resistance differently than when a stress is applied that is perpendicular on the current of the piezo-resistor.

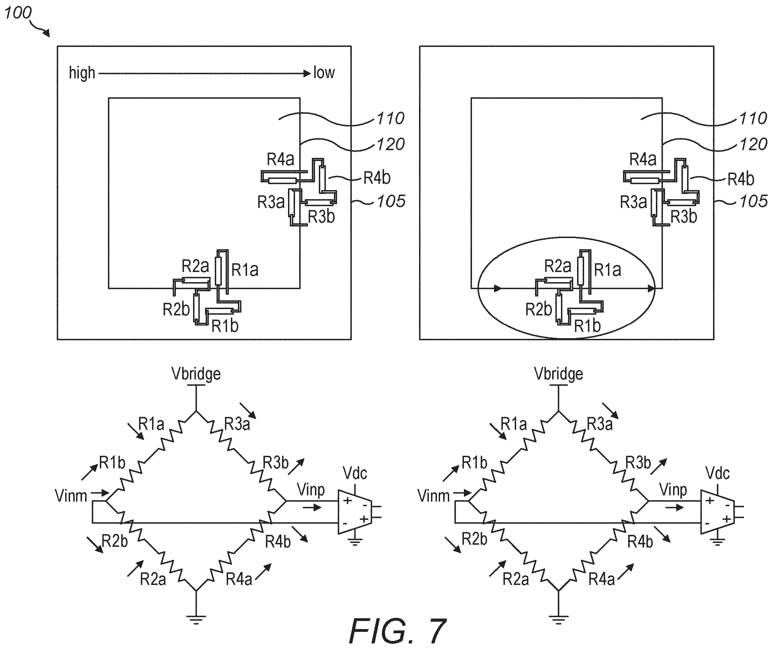

The impact of stress on the sensors is illustrated in FIG. 7. If a stress gradient is present with a high stress on the left side and a low stress on the right side, then the stress on R1 and R2 is higher than the stress on R3 and R4 (see left drawings FIG. 7). The stress on R1a is the same as the stress on R1b and the stress on R2a is the same as the stress on R2b. The impact of the stress on the piezo coefficient of the piezo resistor depends on the orientation of the piezo resistor. For a p-type resistor the coefficient is almost the same value but opposite for orthogonal piezo resistors.

Since resistors R1a and R1b as well as resistors R2a and R2b have a different orientation, the stress is significantly compensated and the output voltages $V_{inm}$ and $V_{inp}$ are not significantly changing and thus the differential voltage is also not significantly changing when the sensor is subjected to a stress gradient. The same holds for R3a and R3b and R4a and R4b.

The same reasoning can be made for the right side drawings of FIG. 7 where a local stress concentration is shown. For stress every resistor is compensated separately. If, for example the first piezo resistor R1a and the second piezo resistor R1b see the same stress, the stress is significantly compensated locally. Similarly, if the third piezo resistor R2a and the fourth piezo resistor R2b see the same stress, also this stress is significantly compensated locally and the output voltage will remain substantially constant.

Temperature compensation is achieved by providing neighboring resistors within each group. The temperature has a similar effect on the resistors R1a and R1b of the first group. They will both increase or decrease due to a temperature change. Therefore having only resistors R1a and R1b will not compensate the temperature effect on the resistors due to a temperature change. Therefore, resistors R2a and R2b are positioned close to the resistors R1a and R1b so that they see substantially the same temperature. By doing so the temperature effect on the resistors can be compensated such that the measured pressure is substantially independent on temperature gradients or hot spots.

## Claims

1. A semiconductor pressure sensor for measuring an external pressure exerted on the sensor, comprising:

   a membrane as part of a semiconductor substrate for being deformed due to the external pressure, having a membrane edge and a membrane thickness;
   a first group of neighboring resistors comprising a first resistor pair (R1a, R2a) and a third resistor pair (R1b, R2b) and a second group of neighboring resistors comprising a second resistor pair (R3a, R4a) and a fourth resistor pair (R3b, R4b);
   wherein the first resistor pair (R1a, R2a) is located on or adjacent to the membrane edge, and wherein the second resistor pair (R3a, R4a) is separated from the first resistor pair and located on or adjacent to the membrane edge; and wherein the third resistor pair (R1b, R2b) is located at least partially outside of the membrane or at least partially on a zero stress zone of the membrane, and the fourth resistor pair (R3b, R4b) is positioned at least partially outside of the membrane or at least partially on a zero stress zone of the membrane;
   wherein the resistors of each resistor pair are orthogonal;
   and **characterized in that** a first resistor (R1a) of the first resistor pair and a first resistor (R1b) of the third resistor pair are connected in series between a first bias node (Vbridge) and a first output node (Vinm);
   a second resistor (R2a) of the first resistor pair and a second resistor (R2b) of the third resistor pair are connected in series between the first output node (Vinm) and a second bias node (GND);
   a first resistor (R3a) of the second resistor pair and a first resistor (R3b) of the fourth resistor pair are connected in series between the first bias node (Vbridge) and a second output node (Vinp);
   a second resistor (R4a) of the second resistor pair and a second resistor (R4b) of the fourth resistor pair are connected in series between the second output node (Vinp) and the second bias node (GND).

2. A semiconductor pressure sensor according to claim 1, wherein the first resistor (R1a) of the first resistor pair and the first resistor (R1b) of the third resistor pair are orthogonal, and wherein the first resistor (R3a) of the second resistor pair and the first resistor (R3b) of the fourth resistor pair are orthogonal, and wherein the second resistor (R2a) of the first resistor pair and the second resistor (R2b) of the third resistor pair are orthogonal, and wherein the second resistor (R4a) of the second resistor pair and the second resistor (R4b) of the fourth resistor pair are orthogonal.

3. A semiconductor pressure sensor according to any of the previous claims wherein the membrane has a square or rectangular shape.

4. A semiconductor pressure sensor according to claim 3 wherein the first group of neighboring resistors is arranged at a first side of the membrane and wherein the second group of neighboring resistors is arranged at a second side of the membrane.

**5.** A semiconductor pressure sensor according to claim 4 wherein the first side is next to the second side.

**6.** A semiconductor pressure sensor according to claim 4 wherein the first side is opposite to the second side.

**7.** A semiconductor pressure sensor according to any of the claims 1 to 3 wherein the membrane has a circular or ellipsoidal shape.

**8.** A semiconductor pressure sensor according to claim 7 wherein the first group and the second group have an angular separation of 90°.

**9.** A semiconductor pressure sensor according to any of the previous claims wherein a voltage difference between the first output node and the second output node is used as a measure of the pressure on the membrane.

**Patentansprüche**

**1.** Ein Halbleiterdrucksensor zum Messen eines auf den Sensor ausgeübten externen Drucks, umfassend:

eine Membran als Teil eines Halbleitersubstrats, um aufgrund des externen Drucks verformt zu werden, die einen Membranrand und eine Membrandicke aufweist;
eine erste Gruppe benachbarter Widerstände, umfassend ein erstes Widerstandspaar (R1a, R2a) und ein drittes Widerstandspaar (R1b, R2b), und eine zweite Gruppe benachbarter Widerstände, umfassend ein zweites Widerstandspaar (R3a, R4a) und ein viertes Widerstandspaar (R3b, R4b);
wobei sich das erste Widerstandspaar (R1a, R2a) auf oder neben dem Membranrand befindet und wobei sich das zweite Widerstandspaar (R3a, R4a) vom ersten Widerstandspaar getrennt und auf oder neben dem Membranrand befindet;
und wobei sich das dritte Widerstandspaar (R1b, R2b) zumindest teilweise außerhalb der Membran oder zumindest teilweise auf einer spannungsfreien Zone der Membran befindet und das vierte Widerstandspaar (R3b, R4b) zumindest teilweise außerhalb der Membran oder zumindest teilweise auf einer spannungsfreien Zone der Membran positioniert ist;
wobei die Widerstände jedes Widerstandspaares orthogonal sind;
und **dadurch gekennzeichnet, dass**
ein erster Widerstand (R1a) des ersten Widerstandspaars und ein erster Widerstand (R1b) des dritten Widerstandspaars in Reihe zwischen einem ersten Vorspannungsknoten (Vbridge) und einem ersten Ausgangsknoten (Vinm) verbunden sind;
ein zweiter Widerstand (R2a) des ersten Widerstandspaars und ein zweiter Widerstand (R2b) des dritten Widerstandspaars in Reihe zwischen dem ersten Ausgangsknoten (Vinm) und einem zweiten Vorspannungsknoten (GND) verbunden sind;
ein erster Widerstand (R3a) des zweiten Widerstandspaars und ein erster Widerstand (R3b) des vierten Widerstandspaars in Reihe zwischen dem ersten Vorspannungsknoten (Vbridge) und einem zweiten Ausgangsknoten (Vinp) verbunden sind;
ein zweiter Widerstand (R4a) des zweiten Widerstandspaars und ein zweiter Widerstand (R4b) des vierten Widerstandspaars in Reihe zwischen dem zweiten Ausgangsknoten (Vinp) und dem zweiten Vorspannungsknoten (GND) verbunden sind.

**2.** Ein Halbleiterdrucksensor nach Anspruch 1, wobei der erste Widerstand (R1a) des ersten Widerstandspaars und der erste Widerstand (R1b) des dritten Widerstandspaars orthogonal sind, und wobei der erste Widerstand (R3a) des zweiten Widerstandspaars und der erste Widerstand (R3b) des vierten Widerstandspaars orthogonal sind, und wobei der zweite Widerstand (R2a) des ersten Widerstandspaars und der zweite Widerstand (R2b) des dritten Widerstandspaars orthogonal sind, und wobei der zweite Widerstand (R4a) des zweiten Widerstandspaars und der zweite Widerstand (R4b) des vierten Widerstandspaars orthogonal sind.

**3.** Ein Halbleiterdrucksensor nach einem der vorstehenden Ansprüche, wobei die Membran eine quadratische oder rechteckige Form aufweist.

**4.** Ein Halbleiterdrucksensor nach Anspruch 3, wobei die erste Gruppe benachbarter Widerstände auf einer ersten Seite der Membran angeordnet ist und wobei die zweite Gruppe benachbarter Widerstände auf einer zweiten Seite der Membran angeordnet ist.

**EP 4 517 287 B1**

**5.** Ein Halbleiterdrucksensor nach Anspruch 4, wobei die erste Seite neben der zweiten Seite liegt.

**6.** Ein Halbleiterdrucksensor nach Anspruch 4, wobei die erste Seite der zweiten Seite gegenüberliegt.

**7.** Ein Halbleiterdrucksensor nach einem der Ansprüche 1 bis 3, wobei die Membran eine kreisförmige oder elliptische Form aufweist.

**8.** Ein Halbleiterdrucksensor nach Anspruch 7, wobei die erste Gruppe und die zweite Gruppe einen Winkelabstand von 90° aufweisen.

**9.** Ein Halbleiterdrucksensor nach einem der vorstehenden Ansprüche, wobei eine Spannungsdifferenz zwischen dem ersten Ausgangsknoten und dem zweiten Ausgangsknoten als Maß für den Druck auf der Membran verwendet wird.


**Revendications**

**1.** Un capteur de pression à semi-conducteur pour mesurer une pression externe exercée sur le capteur, comprenant :

une membrane faisant partie d'un substrat semi-conducteur destinée à être déformée en raison de la pression externe, ayant un bord de membrane et une épaisseur de membrane ;
un premier groupe de résistances voisines comprenant une première paire de résistances (R1a, R2a) et une troisième paire de résistances (R1b, R2b) et un second groupe de résistances voisines comprenant une deuxième paire de résistances (R3a, R4a) et une quatrième paire de résistances (R3b, R4b) ;
dans lequel la première paire de résistances (R1a, R2a) est située sur ou adjacente au bord de la membrane, et dans lequel la deuxième paire de résistances (R3a, R4a) est séparée de la première paire de résistances et située sur ou adjacente au bord de la membrane ;
et dans lequel la troisième paire de résistances (R1b, R2b) est située au moins partiellement à l'extérieur de la membrane ou au moins partiellement sur une zone de contrainte nulle de la membrane, et la quatrième paire de résistances (R3b, R4b) est positionnée au moins partiellement à l'extérieur de la membrane ou au moins partiellement sur une zone de contrainte nulle de la membrane ;
dans lequel les résistances de chaque paire de résistances sont orthogonales ;
et **caractérisé en ce qu'**une première résistance (R1a) de la première paire de résistances et une première résistance (R1b) de la troisième paire de résistances sont connectées en série entre un premier nœud de polarisation (Vbridge) et un premier nœud de sortie (Vinm) ;
une deuxième résistance (R2a) de la première paire de résistances et une deuxième résistance (R2b) de la troisième paire de résistances sont connectées en série entre le premier nœud de sortie (Vinm) et un second nœud de polarisation (GND) ;
une première résistance (R3a) de la deuxième paire de résistances et une première résistance (R3b) de la quatrième paire de résistances sont connectées en série entre le premier nœud de polarisation (Vbridge) et un second nœud de sortie (Vinp) ;
une deuxième résistance (R4a) de la deuxième paire de résistances et une deuxième résistance (R4b) de la quatrième paire de résistances sont connectées en série entre le second nœud de sortie (Vinp) et le second nœud de polarisation (GND).

**2.** Un capteur de pression à semi-conducteur selon la revendication 1, dans lequel la première résistance (R1a) de la première paire de résistances et la première résistance (R1b) de la troisième paire de résistances sont orthogonales, et dans lequel la première résistance (R3a) de la deuxième paire de résistances et la première résistance (R3b) de la quatrième paire de résistances sont orthogonales, et dans lequel la deuxième résistance (R2a) de la première paire de résistances et la deuxième résistance (R2b) de la troisième paire de résistances sont orthogonales, et dans lequel la deuxième résistance (R4a) de la deuxième paire de résistances et la deuxième résistance (R4b) de la quatrième paire de résistances sont orthogonales.

**3.** Un capteur de pression à semi-conducteur selon l'une quelconque des revendications précédentes dans lequel la membrane a une forme carrée ou rectangulaire.

**4.** Un capteur de pression à semi-conducteur selon la revendication 3 dans lequel le premier groupe de résistances voisines est disposé sur un premier côté de la membrane et dans lequel le second groupe de résistances voisines est disposé sur un second côté de la membrane.

5. Un capteur de pression à semi-conducteur selon la revendication 4 dans lequel le premier côté est adjacent au second côté.

6. Un capteur de pression à semi-conducteur selon la revendication 4 dans lequel le premier côté est opposé au second côté.

7. Un capteur de pression à semi-conducteur selon l'une quelconque des revendications 1 à 3 dans lequel la membrane a une forme circulaire ou ellipsoïdale.

8. Un capteur de pression à semi-conducteur selon la revendication 7 dans lequel le premier groupe et le second groupe ont une séparation angulaire de 90°.

9. Un capteur de pression à semi-conducteur selon l'une quelconque des revendications précédentes dans lequel une différence de tension entre le premier nœud de sortie et le second nœud de sortie est utilisée comme mesure de la pression sur la membrane.

FIG. 1

(Prior Art)

FIG. 2

*FIG. 3*

*FIG. 4*

FIG. 5

FIG. 6

*FIG. 7*

EP 4 517 287 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2521163 A
- US 10317297 B2